# EUROPÄISCHE PATENTSCHRIFT

(11) **EP 1 362 218 B1**
(45) Veröffentlichungstag und Bekanntmachung des Hinweises auf die Patenterteilung: **02.05.2012**
(21) Anmeldenummer: 01993809.1
(22) Anmeldetag: 08.11.2001
(51) Int. Cl.: A61C 13/12, G01B 11/25, A61C 13/00

(54) **(DENTALE) OBERFLÄCHENERFASSUNG UND ERZEUGUNG**
(DENTAL) SURFACE MAPPING AND GENERATION
RELEVE ET REALISATION DE SURFACES (DENTAIRES)

(30) Priorität: 08.11.2000 DE 20019033 U; 24.01.2001 DE 20101227 U
(43) Veröffentlichungstag der Anmeldung: 19.11.2003
(60) Teilanmeldung: 08021006.5
(73) Patentinhaber: Institut Straumann AG, 4002 Basel (CH)
(72) Erfinder: WEBER, Gerhard, 82266 Inning (DE); HOLZNER, Stephan, 84453 Mühldorf am Inn (DE); MEHL, Albert, 83607 Holzkirchen (DE); GLOGER, Wolfram, 82152 Planegg (DE)
(74) Vertreter: Grünecker, Kinkeldey, Stockmair & Schwanhäusser
(86) Internationale Anmeldenummer: PCT/DE2001/004177
(87) Internationale Veröffentlichungsnummer: WO 2002/039056

(56) Entgegenhaltungen:
- EP-A- 0 913 130
- EP-A1- 0 054 785
- WO-A1-97/35439
- DE-A- 19 721 688
- DE-C- 19 605 741
- US-A- 4 935 635
- US-A- 5 338 198

## Beschreibung

Die vorliegende Erfindung betrifft eine Oberflächenerfassungseinrichtung sowie ein Verfahren zur Oberflächenerfassung. Insbesondere und mit Vorzug befasst sich die vorliegende Erfindung mit einer solchen Einrichtung und einem solchen Verfahren zur Erfassung von Oberflächen von Zähnen.

Die grundlegenden Technologien, auf denen die vorliegende Erfindung aufbaut oder mit denen sie kombinierbar ist, sind in den Offenlegungsschriften DE 44 39 307 A1 und DE 197 21 688 A1 offenbart.

Das US-Patent 5,338,198 offenbart die Erzeugung eines dreidimensionalen Modells der Zähne und des Kieferbogens eines Patienten. Ein Gussabdruck wird dazu auf einem Tisch in der x-y-Ebene aufgebracht und mit einem Laserstrahl abgetastet. In y-Richtung erfolgt eine diskrete und in x-Richtung eine kontinuierliche Verschiebung während des Abtastens. Der Tisch kann zudem verkippt werden. Die verschiedenen Abtastdatensätze können für eine genauere Berechnung der Form des Abdrucks verglichen und korreliert werden.

Die Erfindung ist wie in den Ansprüchen definiert.

Die Erfindung schafft eine Oberflächenerfassungseinrichtung mit Einrichtungen zur Ablaufs- und/oder Aufwandsoptimierung, die einen gepulsten Laser zur Belichtung enthalten, wobei die Einrichtungen zur Ablaufs- und/oder Aufwandsoptimierung derart ausgelegt sind, dass zwei Halbbilder, die verschiedene Positionen oder Ansichten zeigen, ausgewertet werden.

Dabei ist vorzugsweise vorgesehen, dass die Einrichtungen zur Ablaufs- und/oder Aufwandsoptimierung Rohmaterial-Rückgewinnungseinrichtungen enthalten, und/oder dass die Einrichtungen zur Ablaufs- und/oder Aufwandsoptimierung eine automatisierte Steuerung der Intensität eines verwendeten Laserlichtes enthalten.

Weitere alternative oder zusätzliche Ausgestaltungen einer erfindungsgemäßen Oberflächenerfassungseinrichtung insbesondere zur Gewinnung von Oberflächendaten von Zähnen bestehen darin, dass die Einrichtungen zur Ablaufs- und/oder Aufwandsoptimierung Einrichtungen zum Ausfuhren einer Eichprozedur unter Auswertung von Überlagerungsfehlern an Matching-Stellen enthalten, und/oder dass eine Bildaufzeichnungseinrichtung, insbesondere ein CCD-Chip, so angeordnet ist, dass Zeilen unter Berücksichtigung des

Scheimpflugwinkels senkrecht zur Verfahrrichtung des Messtisches liegen.

Eine weitere Variante einer Oberflächenerfassungseinrichtung insbesondere zur Gewinnung von Oberflächendaten von Zähnen nach der Erfindung besteht darin, dass die Einrichtungen zur Ablaufs- und/oder Aufwandsoptimierung Einrichtungen zum Archivieren insbesondere von dreidimensionalen Kieferdaten und/oder zum Nachempfinden der Bissstellung von Ober- und Unterkiefern enthalten.

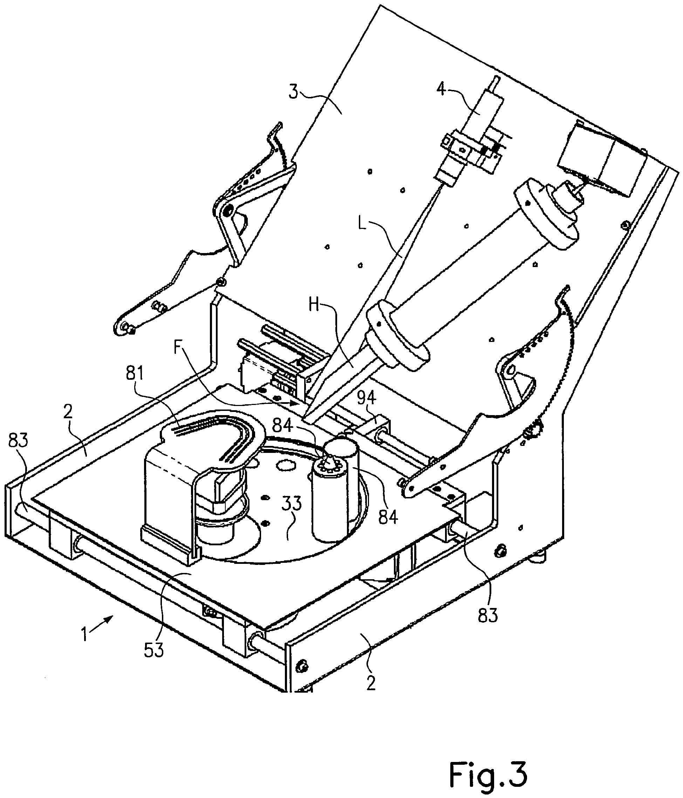

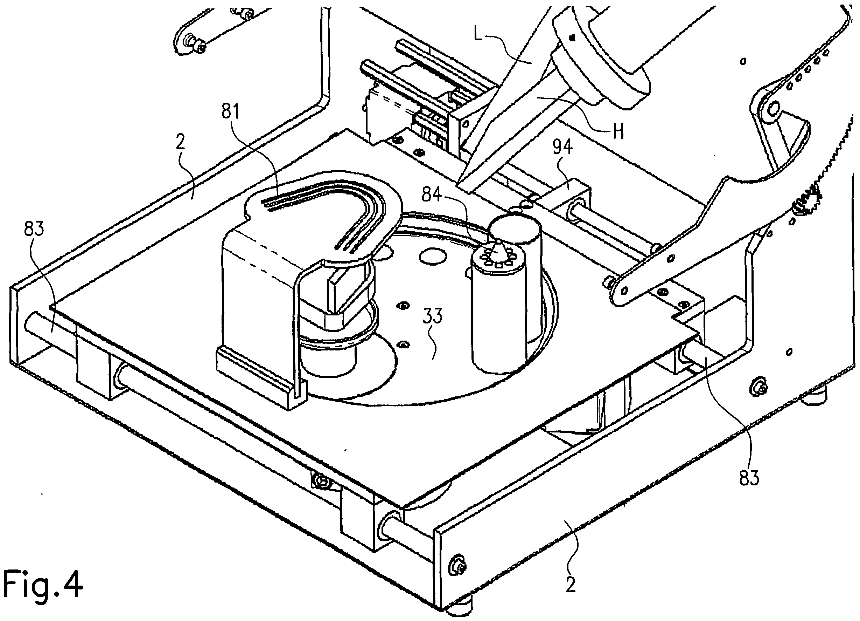

Spezielle vorzugsweise insbesondere mechanische Ausgestaltungen der Oberflächenerfassungseinrichtung richten sich nach dem Offenbarungsgehalt der Figuren 3 und 4 und/oder 5, 6 und 7 sowie der diesbezüglichen Beschreibung.

In einem Beispiel, das nicht Teil der Erfindung ist, ist es ferner bevorzugt, wenn bei der Oberflächenerfassungseinrichtung und einer Erzeugungseinrichtung insbesondere zur Herstellung von Zahnersatz die Einrichtungen zur Ablaufs- und/oder Aufwandsoptimierung Einrichtungen zur optimierten Vorbereitung wenigstens eines Zahnstumpfes zur Herstellung und zum Aufsetzen einer Zahnprothese darauf und/oder Einrichtungen zur Berücksichtigung der Bissstellung von Ober- und Unterkiefer enthalten.

Die Oberflächenerfassungsverfahren zur Erlangung des oben angegebenen Ziels der Erfindung und/oder nicht erfindungsgemäße Erzeugungsverfahren sind dadurch gekennzeichnet, dass sie eine oder mehrere der vorstehend erläuterten Einrichtungen verwenden bzw. entsprechend analog funktionieren.

In einem Beispiel, das nicht Teil der Erfindung ist, wird ein Patientendatenarchivierungssystem geschaffen, das durch eine Chipkarte und/oder dezentrale Datenspeicher insbesondere für Zahndaten gekennzeichnet ist.

Einzelne Aspekte der Erfindung werden nachfolgend noch näher erläutert.

Gemäß einem Aspekt der vorliegenden Erfindung ist ausgehend von Oberflächenerfassungstechnologien, -einrichtungen und -verfahren, wie sie in den vorstehend angegebenen und hierin durch Bezugnahme aufgenommenen Veröffentlichungen angegeben sind und die nachfolgend vereinfachend als "Scanner" bzw. "Scannen" bezeichnet werden, in Kombination mit beispielsweise einer Fräsmaschine eine Rohmaterial-Rückgewinnung vorgesehen. Der Scanner bildet zusammen mit der Fräsmaschine und geeigneter EDV eine CAD-CAM-Anlage insbesondere zur Herstellung von Gold- oder Platinzahnersatz. Die Rohstoff-Rückgewinnung kann bevorzugt dadurch realisiert werden, dass die beispielsweise verwendete Fräsmaschine mit Einrichtungen z.B. zum Absaugen von Gold- oder Platinstaub/-spänen ausgerüstet ist. In Anbetracht der hohen Kosten für die Rohmaterialien Gold oder Platin wird dadurch vorteilhaft eine wesentliche Senkung der Kosten für die Herstellung von Gold- oder Platinzahnersatz erreicht.

Die in den eingangs angegebenen Veröffentlichungen offenbarte Scannertechnologie wird nicht erfindungsgemäß weiter verbessert.

Zum einen wird dies durch eine automatische Regelung der Intensität des verwendeten Laserlichts erreicht. Dabei wird vorzugsweise die Reflektivität der zu vermessenden beispielsweise Zahnoberfläche über die Intensität des z. B. von einem CCD-Chip aufgenommenen Lichtes ermittelt. Basierend auf dem Ermittlungsergebnis wird dann die Intensität des Laserlichts nachgeregelt. Die Verbesserung dieser Ausgestaltung besteht darin, dass dadurch Messfehler aufgrund von Unter- oder Übersteuerungen des Messsignals vermindert werden.

Die Scannertechnologie wird im Rahmen der vorliegenden Erfindung zum anderen durch eine Geschwindigkeitssteigerung verbessert, indem anstatt eines Vollbildes von der Kamera/dem CCD-Chip, bestehend aus zwei zusammengesetzten Halbbildern, zwei solche Halbbilder ausgewertet werden, die unterschiedliche Ansichten zeigen. Die unterschiedlichen Ansichten entstehen durch verschiedene Relativpositionen der zu erfassenden Oberfläche beispielsweise eines Zahnes und der Vorrichtung zum Aufnehmen dieser Oberfläche (z. B. eine Kamera mit einem oder alleine ein CCD-Chip).

Insbesondere die vorstehende Verbesserung, aber allgemein die verwendete Abtasttechnologie kann dadurch vorteilhaft weitergebildet werden, dass ähnlich einem Stroboskopeffekt der verwendete Laser gepulst angesteuert und beispielsweise der Tisch, der das Objekt trägt, dessen Oberfläche erfasst werden soll, wie z. B. einen Zahn oder ein Modell davon, Insbesondere kontinuierlich verfahren wird. Durch den gepulsten Laserstrahl werden von jeder Relativposition von Objekt und Kamera Momentaufnahmen oder "Standaufnahmen" erstellt, da das Objekt während der kurzen Belichtungszeit mit einem Laserstrahlpuls scheinbar steht und in dieser Position von der Kamera aufgenommen werden kann. Besonders bevorzugt ist jeder einzelne Laserimpuls mit der Aufnahme eines Halbbildes gekoppelt.

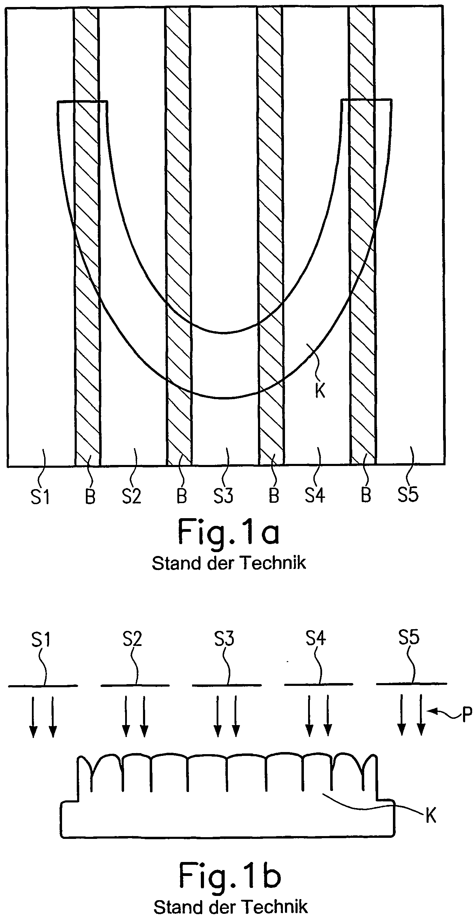

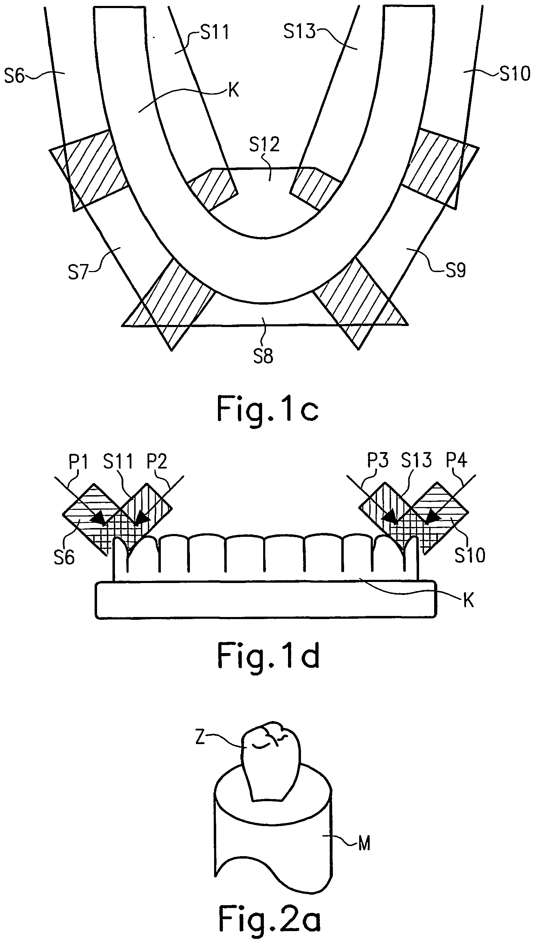

Noch eine weitere erfindungsgemäße Verbesserung der Scannertechnologie besteht in einer Eichprozedur, die verschiedene räumliche Verzerrungen der ermittelten Messgrößen korrigiert. Dabei wird ein Körper aus verschiedenen Ansichten vermessen. Die Messungen werden per Matching-Algorithmus zusammengelegt. Die an verschiedenen Stellen des Objekts bei diesem Zusammenlegen auftretenden Überlagerungsfehler werden dahingehend analysiert, dass Abweichungen in allen Raumrichtungen erkannt werden. Aus diesen Abweichungen resultieren Eichfehler, aus denen wiederum Eichparameter in allen Raumrichtungen und Raumdrehungen errechnet werden. Diese Eichparameter können dann bei weiteren Messungen von der EDV automatisch berücksichtigt werden, wodurch in vorteilhafter Weise eine gesteigerte Messgenauigkeit erreicht wird. Weitere Einzelheiten hierzu ergeben sich aus dem in der Fig. 1 dargestellten Ausführungsbeispiel.

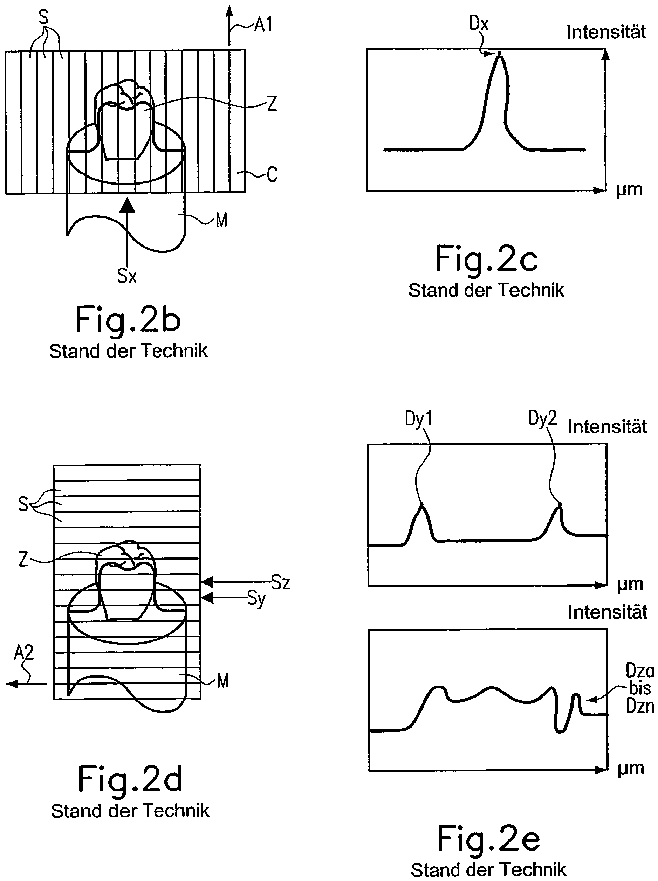

Des weiteren wird die Scannertechnologie gemäß dem oben angegebene Stand der Technik durch die Erfindung dadurch verbessert, dass ein CCD-Chip (oder allgemein eine Oberflächenbilderfassungsvorrichtung) so angeordnet wird, dass beispielsweise Kamerazeilen unter Berücksichtigung des Scheimpflugwinkels senkrecht zu z. B. der Verfahrrichtung des Messtisches liegen, auf dem das zu erfassende Objekt installiert ist. Weitere Einzelheiten hierzu sind in dem Ausführungsbeispiel gemäß der Figur 2 dargestellt. Dadurch wird eine bessere Ausnutzung des Messfeldes für die Vermessung beispielsweise von Zähnen erreicht, wobei zu beachten ist, dass marktübliche Chips nicht quadratisch sind.

Die bekannte Scannertechnologie läßt sich außerdem noch nicht erfindungsgemäß dadurch verbessern, dass entsprechend der vorliegenden Erfindung Verfahr- und Schwenkachsen von Objektträger, Objekt und/oder Kamera so vorgesehen und angeordnet werden, dass eine Einsicht in alle im Kiefer vorkommenden Hinterschneidungen, wenn die Erfindung z. B. im Bereich von Zahnoberflächenerfassung zum Einsatz kommt, ermöglicht ist. Dies hat den Vorteil, dass eine vollautomatische Vermessung/Mess-Strategie zum Einsatz kommen kann.

Gemäß einem weiteren Aspekt der vorliegenden Erfindung werden mit Vorteil diverse EDV-Module beispielsweise in verschiedenen Feldern der Zahnmedizin eingesetzt.

So schafft die vorliegende Erfindung eine Scannertechnologie, die mit einer EDV, vorzugsweise in Form eines Standart-Computers mit Spezialsoftware als Steuereinrichtung, ausgestattet ist, die zur Archivierung z. B. von dreidimensionalen Kieferdaten, insbesondere Oberflächendaten, geeignet ist. Die Archivierung dient dem Ersatz bisheriger Archivierungsformen von solchen Daten in Form von Gipsmodellen. In vielen Bereichen der Zahnmedizin war es bisher erforderlich, Gipsmodelle von Patienten bis zu 10 Jahre lang aufzubewahren, was einen enormen Platzbedarf zur Folge hat. Die elektronische Archivierung dieser Daten schafft jedoch nicht nur hinsichtlich des Platzbedarfes Abhilfe, sondern ermöglicht auch eine schnellere, einfachere und kostengünstigere Nutzung der archivierten Daten. So ist es beispielsweise möglich, 3D-Messdaten von ehemals gesunden Zahnoberflächen zu erfassen und zu archivieren. Dies ermöglicht nach Jahren, z. B. wenn ein Zahn ersetzt werden muss, eine Rekonstruktion des Zahns in Form eines Zahnersatzes, der beispielsweise anhand der archivierten Daten durch frästechnische Erzeugung seiner Oberflächen hergestellt werden kann.

Eine elektronische Archivierung von Kiefer-/Gebissdaten kann aber noch in vielerlei anderen Hinsichten vorteilhaft genutzt werden. So ermöglichen diese Daten mittels einer geeigneten EDV eine Nachempfindung der Bissstellung von Ober- und Unterkiefern. Insbesondere kann dies erzeugt werden, indem zunächst der Unterkiefer vermessen wird, dann ein Bissregistrat (Abdruck im Patientenmund, während er zubeißt) auf den Unterkiefer gelegt wird und nochmals vermessen wird. Damit sind beide Zahnoberflächen in der Bisssituation ermittelt. Beide Datensätze können getrennt oder zusammen visualisiert werden und alle damit verbundenen zahnärztlichen Analysen z. B. qualitativ oder quantitativ (in Form von Abstands- oder Volumenmessungen) durchgeführt werden. Zur Ergänzung kann auch der komplette Oberkiefer vermessen und mittels des Bissregistrats und beispielsweise einer Matching-Software räumlich referenziert werden. Ebenso können Kaubewegungen mittels Aufnahme der Kieferbewegung und Bißregistrat am Computer simuliert werden. Die Referenzierung der Messdaten von Ober- und Unterkiefer kann auch zur Modulation von Zahnersatz im Zusammenhang mit der CAD-CAM-Technologie verwendet werden.

Eine nicht erfindungsgemäße Variante besteht in einer Scannertechnologie, die mit einer EDV ausgestattet ist, wie z. B. einem Standart-Computer mit einer entsprechenden Software als Steuereinrichtung, um die Bissstellung von Ober- und Unterkiefern auch mit besonderer Ausrichtung für eine kieferorthopädische Behandlung nachempfinden zu können. Eine Behandlungsplanung für z. B., eine Zahnspange kann dadurch simuliert werden, dass beispielsweise in der Software das Gebiss in Zahngruppen bis hin zu Einzelzähnen aufgegliedert wird. Solche Gruppen-/Einzelzähne können bewegt und die Endstellungen simuliert werden. Dies ermöglicht Antworten auf Fragen, ob benötigter Platz auf dem Kieferkamm vorhanden ist und wie der Biss nach der Behandlung aussehen wird. Durch weitere EDV-/Software-Einrichtungen, die modular zusammengefügt werden können, ist eine Behandlungskontrolle möglich. Nach Zeitabschnitten kann ein Kiefer immer wieder gescannt werden. Die zeitlich aufeinander folgenden Aufnahmen können dann als interpolierter "Film" abgespielt werden. Dies ermöglicht einen Vergleich des Verlaufs der tatsächlichen Behandlung mit der geplanten Behandlung und die Festlegung/Durchführung von Korrekturen. Solche Aufnahmereihen können ferner archiviert werden und beispielsweise bei Prozessen eine Beweisführung erleichtern. Auch wird die Kommunikation mit Gutachtern und Kassen erleichtert und beschleunigt.

Ein weiterer nicht erfindungsgemäßer Gesichtspunkt besteht in einer Scannertechnologie, die mit einer EDV/elektronischen Steuerung (beispielsweise durch Software) ausgestattet ist, um z. B. die Bissstellung von Ober- und Unterkiefern auch mit besonderer Ausrichtung für die kieferchirurgische Behandlung nachempfinden zu können. Im Rahmen dieses Aspektes ist insbesondere die Eingliederung von Messdaten der Kieferknochen (ermittelt z. B. mit einem Computertomographen) mittels einer geeigneten Matching-Software vorgesehen. Die Behandlungsplanung (z. B. eine Operation des Kiefers) wird dadurch simuliert, dass in beispielsweise einer Software das Gebiss, der Kiefer und der Kieferknochen in Zahn-/Kieferabschnittsgruppen (bis hin zu Einzelzähnen) aufgegliedert wird. Die Gruppen/Einzelzähne können bewegt und die Endstellungen simuliert werden. Dies ermöglicht eine Beantwortung von Fragen, ob ein benötigter Platz vorhanden ist und wie der Patient nach der Behandlung aussehen wird. Ein weiteres EDV-/Software-Modul kann in diesem Fall für eine Behandlungskontrolle eingesetzt werden. Nach Ablauf von Zeitabschnitten wird jeweils der aktuelle Zustand gescannt. Die Aufnahmen über die Zeit können als interpolierter "Film" abgespielt werden. Der Verlauf der tatsächlichen Behandlung kann mit der geplanten Behandlung verglichen werden und es können eventuell erforderliche Korrekturen daraus abgeleitet werden. In vorteilhafter Weise ermöglicht dieser Aspekt die Planung und Simulation von Implantaten. Auch archivierte Aufnahmereihen zur Beweiserleichterung bei eventuellen Prozessen und leichtere und schnellere Kommunikation mit Gutachtern und Kassen liegen als weitere Vorteile vor.

Ein nicht erfindungsgemäßes Beispiel istl schließlich noch ein Patientendatenträger, wie beispielsweise eine Chipkarte, der sämtliche personenbezogenen Gesundheits- und Krankheitsdaten enthält. Ein solcher individueller Datenträger kann in ein Verwaltungs- und Archivierungssystem integriert sein, das insbesondere dezentrale Speichereinrichtungen zum Archivieren von großen Datenmengen enthält, auf die mittels Zugangseinrichtungen auf dem Datenträger zugegriffen werden kann. So lassen sich beispielsweise auch zahnmedizinische Patientenstammdaten, die 3D-Kiefer- und -Einzelzahndaten von Zahnoberflächen und innere Aufbauten von individuellen Zähnen sowie Erzeugungsdaten von eingesetztem Zahnersatz (Material- und z. B. Fräsdaten) enthalten können, archivieren und leicht verfügbar machen. Daneben werden ferner Krankenversicherungsdaten, digitale Röntgenaufnahmen, ehemals und aktuell behandelnde Ärzte und allgemein die gesamte Krankengeschichte eines Patienten gespeichert. Im Rahmen der Erfindung können ferner spezielle Lese- und Auswertegeräte vorgesehen und u. U. in dem System integriert sein. Damit werden als Vorteile beispielsweise eine doppelte Archivierung beim Patienten, bessere Rückverfolgungsmöglichkeiten für Krankenkassen und Datenverfügbarkeit auch bei Wohnortwechsel erreicht.

Ein nicht erfindungsgemäßes Beispiel ist eine weitere Variante/Ausgestaltung zur Realisierung einer gepulsten Messung, wie bereits weiter oben grundsätzlich dargestellt.

Eine entsprechende Oberflächenerfassungsein- oder -Vorrichtung besteht beispielsweise aus einem Lineartisch, einer CCD-Kamera, einer Framegrabberkarte und einem Laserlinienmodul. Zur Datenerfassung wird die Laserlinie permanent auf das Messobjekt projiziert Der Messtisch bewegt das Objekt schrittweise unter der Messanordnung (Laserlinie und CCD-Chip) hindurch. Nach jedem Schritt erfolgt eine Messung.

Dabei ist der frühere genaue Ablauf folgendermaßen: Der Messtisch fährt in eine Startposition und stoppt. Das Objekt muß ruhen, damit kein "Verwackeln" der Aufnahme zu Messungenauigkeiten führt. Dann liest die CCD-Kamera eine Zeile aus (Vollbild) und übergibt das Signal an die Framegrabberkarte. Anschließend wird der Tisch beschleunigt (Anfahrrampe). Danach wird der Tisch wieder abgebremst und in einer vorgegebenen Position gestoppt (Bremsrampe). Die CCD-Kamera liest dann die nächste Zeile aus. Dieser Gesamtvorgang läuft unter Verdunkelung ab. Die Laserdiode kann nur auf eine gewisse Leistung hochgeregelt werden, damit das Signal nicht übersteuert.

Beispielsweise, nicht als Teil der Erfindung, ist als Neuerung vorgesehen, dass die Laserlinie stroboskopartig auf das Messobjekt projiziert wird, d.h., dass regelmäßig Lichtblitze in Form einer Laserlinie auf das Objekt geworfen werden. Der Meßtisch bewegt das Objekt kontinuierlich unter der Messanordnung (Laserlinie, CCD-Chip) hindurch. Gleichzeitig mit jedem Lichtblitz erfolgt eine Messung. Insbesondere fährt der Messtisch mit kontrollierter/überwachter Geschwindigkeit, die mit der Blitzsteuerung abgestimmt ist. In vorzugsweise regelmäßigen Abständen (Zeit oder Verfahrweg des Tisches) wird ein Blitz ausgesandt und gleichzeitig ein Halbbild des CCD-Chips ausgelesen, Dieses Signal wird an die Framegrabberkarte übergeben und mittels spezieller Software ausgewertet. Die Blitzzeit ist so kurz, dass ein "Verwackeln", das durch die kontinuierliche Tischbewegung entstehen könnte, vernachlässigbar ist.

Mit der vorstehenden Variante wird das Messverfahren um einen Faktor 5 beschleunigt, da die Anfahr- und Bremszeiten des Tisches entfallen und die Lichtblitze derart schnell getaktet werden können, dass mit Halbbildern ausgelesen werden kann. Als weiterer Vorteil ergibt sich, dass die Steuerung kostengünstiger gestaltet werden kann, da nur ein gleichmäßiger Vorschub gewährleistet und keine genaue Ruheposition eingestellt werden muß. Vorteilhaft ist ferner, dass die bisherigen opto-mechanischen Anordnungen weiter eingesetzt/verwendet werden können, da die vorliegende Neuerung im Hinblick auf Steuerung, Regelung und Software für die Komponenten realisiert werden kann bzw. besteht, Weiterhin ist von Vorteil, dass der verwendete Blitz wesentlich intensiver als das früher verwendete Lasersignal ist, wodurch die Messung auch bei Tageslicht erfolgen kann und der Messraum nicht abgedunkelt werden muss, was die Arbeit und deren Aufwand und Zeitbedarf insbesondere beim Auswechseln von Messobjekten wesentlich verringert.

Neben den bereits oben und vorstehend beschriebenen technischen Spezifikationen zum Thema "Stroboskoplaser" etc. liegen im Rahmen der Erfindung ferner mechanische Ausführungen, die in ihrem Konzept sowie konkreten Ausgestaltungen und auch Betriebsverfahren in Kombination und auch jeweils für sich alleine als schützenswert und schutzfähig angesehen werden.

Insbesondere gegenüber dem technischen Stand der Vorrichtung zur Herstellung eines Zahnersatzes gemäß der EP 98115809.0 beinhaltet die vorliegende Erfindung eine Reihe von Konzepten und Ausgestaltungen, die ein entsprechendes Gerät in der Herstellung drastisch verbilligen und funktionssicherer machen sowie insgesamt Verbesserungen gegenüber der technischen Lehre in der EP 98115809.0 darstellen. Weiterhin stellen diese Aspekte der vorliegenden Erfindung vorteilhafte und bevorzugte Weiterbildungen und Kombinationen der in der DE 44 39 307 A1 und DE 197 21 688 A1 offenbarten Technologie dar, deren vollständiger Inhalt ebenso wie der der Offenlegungsschrift zur EP 98115809.0 insoweit zur Vermeidung bloßer identischer Wiederholung in den vorliegenden Unterlagen in letzteren hiermit durch Bezugnahme vollumfänglich aufgenommen ist. Die einzelnen Merkmale und Merkmalskombinationen sind insbesondere, jedoch nicht zwingend oder ausschließlich, mit der weiter oben erläuterten Stroboskoptechnik zu kombinieren.

Weitere bevorzugte und vorteilhafte Ausgestaltungen der Erfindung ergeben sich aus den einzelnen Ansprüchen und deren Kombinationen.

Nachfolgend wird die Erfindung lediglich exemplarisch anhand von Ausführungsbeispielen unter Bezugnahme auf die Zeichnung näher erläutert, in der:
- Fig. 1a, 1 b: eine schematische Draufsicht auf einen Kiefer bzw. Frontansicht eines Kiefers mit eingezeichneten Abtaststreifen nach dem Stand der Technik ist,
- Fig. 1 c, 1d: eine schematische Draufsicht auf einen Kiefer bzw. Frontansicht eines Kiefers mit eingezeichneten Abtaststreifen nach der Erfindung ist,
- Fig. 2a: eine perspektivische schematische Ansicht eines Messobjektes in Form eines Zahnes ist,
- Fig. 2b: eine schematische Ansicht des Messobjektes aus der Fig. 2a mit eingezeichneten Abtaststreifen nach dem Stand der Technik ist,
- Fig. 2c: eine schematische Ansicht eines Signalbildes einer Abtastzeile aus der Fig. 2b ist,
- Fig. 2d: eine schematische Ansicht des Messobjektes aus der Fig. 2a mit eingezeichneten Abtaststreifen nach der Erfindung ist,
- Fig. 2e: eine schematische Ansicht eines Signalbildes einer Abtastzeile aus der Fig. 2d ist,
- Fig. 3: eine schematische perspektivische Ansicht eines Ausführungsbeispiels einer Oberflächenerfassungseinrichtung schräg von oben ist,
- Fig. 4: eine vergrößerte Darstellung eines Teils aus der Fig. 3 ist,
- Fig. 5: eine schematische perspektivische Ansicht des Ausführungsbeispiels der Oberflächenerfassungseinrichtung aus der Fig. 3 schräg von oben in einer anderen Einstellung und vergrößert ist,
- Fig. 6: eine schematische perspektivische Ansicht des Ausführungsbeispiels der Oberflächenerfassungseinrichtung aus der Fig. 3 schräg von unten und vergrößert ist,
- Fig. 7: eine schematische perspektivische Ansicht des Ausführungsbeispiels der Oberflächenerfassungseinrichtung aus der Fig. 3 schräg von unten und vergrößert sowie gegenüber der Ansicht aus der Fig. 6 etwas gedreht ist,
- Fig. 8: eine graphische Darstellung eines Kiefers mit schematisch eingezeichneten Lagen von Messstreifen auf der Basis von erfindungsgemäß eingescannten Daten ist,
- Fig. 9: eine graphische Darstellung des Kiefers aus der Fig. 8 erfindungsgemäß bearbeiteten Zähnen ist,
- Fig. 10: eine schematische Teilansicht eines Kiefers zur Erläuterung eines weiteren Aspektes der Erfindung ist,
- Fig. 11: eine schematische Seitenansicht eines Kau- oder Bisssimulators zur Verdeutlichung eines weiteren Aspektes der Erfindung ist, und
- Fig. 12: eine schematische Seitenansicht eines Kiefers aus der Fig. 11 in einer Oberflächenerfassungseinrichtung ist.

In den einzelnen Figuren der Zeichnung sind gleiche oder ähnliche oder gleich oder ähnlich wirkende Teile mit denselben Bezugszeichen versehen oder vergleichbar dargestellt, so dass sich Teile sowie deren Kombinationen, Funktionen und Wirkungsweisen für einen Fachmann auch aus der Betrachtung der Figuren der Zeichnung alleine, deren Vergleich und/oder den nachfolgend beschriebenen Angaben ggf. alleine ohne weiteres erschließen, auch wenn keine Bezugnahmen zwischen einzelnen Figuren und/oder zwischen Figuren und Text explizit angegeben oder dargestellt sind.

Zunächst wird ein herkömmliches Messverfahren erläutert, um die Funktion eines entsprechenden Gerätes zu verstehen. Dieses Messverfahren wird beispielsweise von der Firma DCS Forschungs- und Entwicklungs AG, Allschwil, Schweiz, benutzt und wurde überdies bereits 1999 öffentlich vorgestellt. Im Rahmen der vorliegenden Erfindung wird dieses Messverfahren deutlich verbessert.

In den Fig. 1 und 2 ist schematisch eine Abtastung eines Kiefers K in einer Draufsicht bzw. einer Frontansicht verdeutlicht. Beispielsweise werden fünf Messstreifen S1, S2, S3, S4 und S5 nebeneinander erfasst. Die fünf Messstreifen S1 bis S5 überlappen in Bereichen B, die in der Fig. 1a schraffiert dargestellt und in der Fig. 1b der Übersichtlichkeit halber weggelassen sind; Die Fig. 1b dient nur der Verdeutlichung der Lage der Messstreifen S1 bis S5 in der Frontansicht des Kiefers K sowie der Richtung der Abtaststrahlung gemäß den Pfeilen P. Die Überlappungsbereiche B ermöglichen das Zusammenfügen der Daten der einzelnen Messstreifen durch Matching-Verfahren zu einem Gesamtbild des Kiefers K.

Eine erfindungsgemäße Variante der vorstehenden Technologie ist in den Fig. 1 c und 1d ebenfalls in einer Draufsicht bzw. einer Frontansicht gezeigt. Bei dieser Methodik und mit den entsprechenden Einrichtungen werden Messstreifen S6, S7, S8, S9, S10, S11, S12 und S13 erzeugt, die jedoch nur aus sogenannten Halbbildern bestehen, so dass zwar mehr Messstreifen als bei der Variante nach den Fig. 1a und 1b erzeugt und behandelt werden, diese Messstreifen aber mit deutlich geringerem Datenumfang auskommen. Die Lage der Messstreifen S6 bis S13 ist in der Draufsicht der Fig. 1c bezüglich des Kiefers K dargestellt. Die Bestrahlungsrichtungen sind durch Pfeile P1, P2, P3 und P4 exemplarisch für die Messstreifen S6, S11, S13 bzw. S10 in der Fig. 1d schematisch dargestellt. In der Fig. 1 c sind wiederum Überlappungsbereiche B der einzelnen benachbarten Messstreifen schraffiert eingezeichnet. Durch die bezüglich dem Stand der Technik geänderten Bestrahlungsrichtungen für die einzelnen Messstreifen werden genauer Daten des Kiefers K erhalten, und zwar mit geringerem Daten- und Verarbeitungsaufkommen als beim Stand der Technik durch Verwendung von nur Halbbildern.

Ein einzelnes Messobjekt in Form eines Zahnes Z ist schematisch in einer perspektivischen Ansicht in der Fig. 2a gezeigt, wie es auf einem Messtopf M installiert ist, der zu diesem Zweck beispielsweise mit einer Knetmasse gefüllt ist, in die der Zahn Z mit seinem unteren Ende (nicht sichtbar) gesteckt ist.

Für dieses Messobjekt Z ist in der Fig. 2c die Lage von Messstreifen oder Messzeilen S schematisch dargestellt, und die Fig. 2c zeigt das Signalbild für einen Messstreifen oder eine Messzeile Sx, in der lediglich ein Messpunkt Dx erhalten wird. In der Fig. 2b ist noch die Ausleserichtung (Zeilenrichtung) mit dem Pfeil A1 eingezeichnet. Die Summe aller Messstreifen oder Messzeilen S bildet die Fläche eines Chips C als Bilderfassungseinrichtung, bei dem es sich beispielsweise um einen CCD-Chip oder jegliche andere Kameraeinrichtung handeln kann.

Dagegen wird in einer Messzeile oder in einem Messstreifen S gemäß der Erfindung eine Mehrzahl von Messpunkten, z.B. Dy1 und Dy2 oder Dza bis Dzn, erhalten, wie die Fig. 2d und 2e verdeutlichen, bei denen es sich um Darstellungen analog den Fig. 2b bzw. 2c handelt. Die Ausleserichtung ist dabei gemäß dem Pfeil A2 in der Fig. 2d und der Chip C sowie die Lage der Messstreifen oder Messzeilen S sind gegenüber dem Stand der Technik folglich um 90° gedreht. Durch diese erfindungsgemäße Anordnung werden in der Messzeile Sy zwei Messpunkte Dy1 und Dy2 erhalten. Die Messung in der Zeile Sz führt sogar zu einer Vielzahl von Messpunkten Dza bis Dzn. Für die Auswertung wird dann vorzugsweise mittels einer Software die Chipanordnung wie beim Stand der Technik (siehe Fig. 2b) rückgerechnet und simuliert. Die damit wieder wie beim Stand der Technik erhaltene Ausleserichtung enthält aber wiederum je Linie oder Zeile mehrere Messpunkte, die rechnerisch erfasst werden können als zunächst 1. Punkt, dann 2. Punkt usw. Durch diesen Aspekt der Erfindung werden bei geringerem Aufwand durch Heranziehung nur von Halbbildern dennoch mehr Informationen erhalten, so dass die Genauigkeit durch die Erfindung gegenüber dem genannten Stand der Technik noch zunimmt.

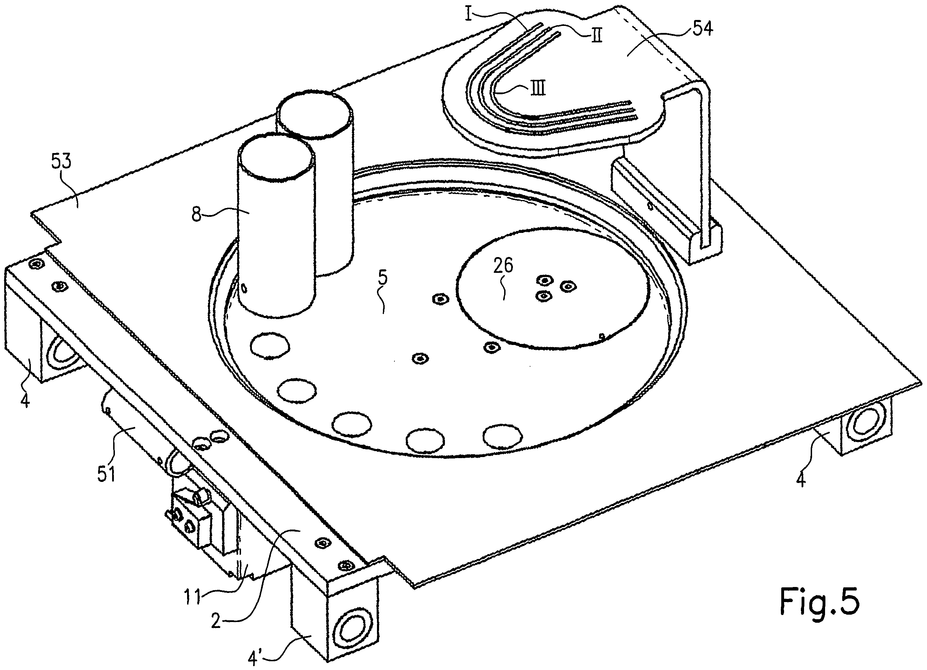

In den Fig. 3 und 4, die eine vergrößerte Darstellung eines Teils der Fig. 3 Ist, ist eine Oberflächenerfassungseinrichtung 1 mit einer Laseroptik 4 dargestellt, von der ein Laserlinienstrahl L ausgeht. Der Schnittpunkt des Laserlinienstrahls L mit dem rechteckigen, vom Objektiv ausgehenden Bildfeld F definiert das Messfeld F. Jedes zu vermessende Objekt muss durch dieses Messfeld F durchgefahren werden. Diese Einzelheit gilt auch für die Ausgestaltungen gemäß den Fig. 5, 6 und 7, auch wenn sie dort aus Darstellungszwecken der übrigen Merkmale nicht mehr gezeigt ist. Insofern wurde zur Vermeidung von Wiederholungen bei der nachfolgenden Befassung mit den Fig. 5, 6 und 7 darauf nicht mehr eingegangen; der Einsatz dieser Technik ist jedoch für den Fachmann selbstverständlich als auch dort einsetzbar zu erkennen und zu verstehen.

Nachfolgend wird, soweit die Ausgestaltung identisch oder vergleichbar ist, zur Vermeidung von Wiederholungen auch auf die Fig. 5, 6 und 7 Bezug genommen.

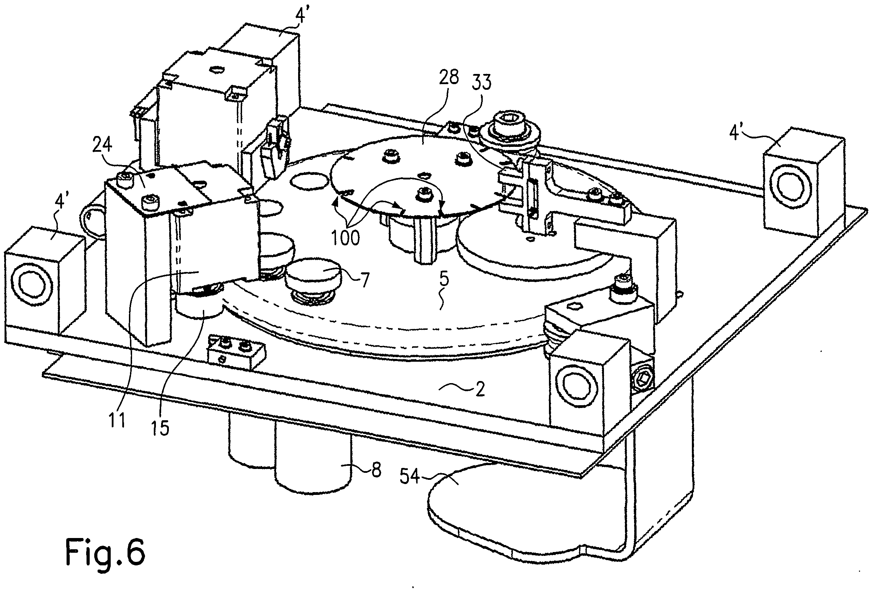

Das "Durchfahren" des Messfeldes F wird mittels einer Linearführung 83 (oder Bezugszeichen 4' in den Fig. 5 und 6) bewerkstelligt. Um mehrere Einzelobjekte, wie insbesondere Zähne, unter dem Messfeld positionieren zu können, rotiert ein Drehteller 33 (oder Bezugszeichen 5 in den Fig. 5, 6 und 7) von Messtopf 84 zu Messtopf 84 (in der Fig. 5 sind die Messtöpfe mit dem Bezugszeichen 8 bezeichnet). In der Fig. 3 sind exemplarisch nur zwei Messtöpfe 84 eingezeichnet (ebenfalls in der Fig. 5 z.B. nur zwei Messtöpfe 8), wobei beispielsweise sieben Stück insgesamt montiert werden können.

Ist ein mit einem Zahn bestückter Messtopf 84 (oder 8 in der Fig. 5) im Messfeld angelangt, so stoppt die Rotation des großen Drehtellers 33 (oder 5 in den Fig. 5, 6 und 7). Der Drehteller 33 (oder 5 in den Fig. 5, 6 und 7) dient also nur zur Positionierung der mit Einzelzähnen bestückten Töpfe 84 (oder 8 in Fig. 5) und/oder eines Kiefers, worauf später eingegangen wird. Die Messung selbst erfolgt, wie oben erläutert wurde, mittels einer Linearbewegung des Messtisches 53 auf den Linearlagern 83 oder 4' (Fig. 5).

Es entsteht ein Messstreifen, der nur eine Seite des zu vermessenden Zahnes sieht. Um weitere Messstreifen aus weiteren Blickwinkeln erfassen zu können, kann der sich im Messbereich befindliche Topf 84 .(oder 8 in der Fig. 5) zwischen den einzelnen Messungen um eine eigene Achse gedreht werden. Dies fuhrt z.B. zu acht Ansichten bzw. der Topf 84 (oder 8 in der Fig. 5) wird zwischen den Messungen um jeweils 45° um seine eigene Achse gedreht, Es entstehen in einem, solchen Fall also acht Messstreifen aus verschiedenen Ansichten. Teile der gewonnenen Oberflächeninformationen kommen in mehreren Messstreifen vor. Mittels dieser Überlappungsbereiche können geeignete Einrichtungen oder Verfahren in Form, beispielsweise einer bereits weiter oben erläuterte Matching-Software die einzelnen Messstreifen zu einem kompletten 3D-Oberflächenbild eines Einzelzahns mit hoher Messgenauigkeit zusammensetzen.

Mit diesen Daten kann nun bereits der Innendatensatz einer Zahnkrone gefräst werden. Neben Einzelkronen können auch mehrfache Einzelzähne zu einer Brücke zusammengefasst werden. Um Brücken fräsen zu können, muss die räumliche Lage mehrerer Einzelkronen zueinander möglichst schnell erfasst werden. Dazu wird ein komplettes Kiefermodell auf dieselbe Weise wie der Einzelzahn vermessen. Es wird auf einen zusätzlichen Drehteller 26 gestellt, der in dem Drehteller 5 in der Fig. 5 vorgesehen ist.

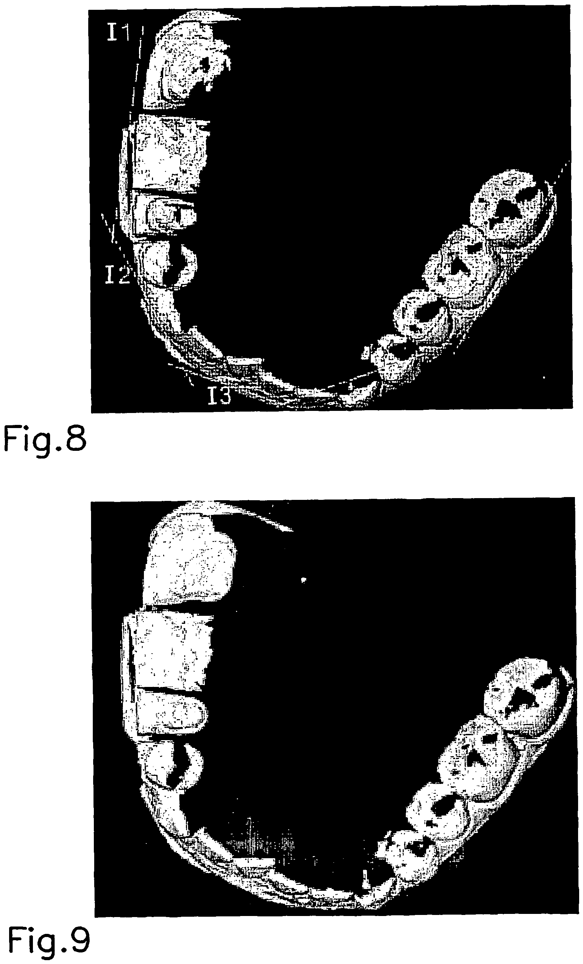

Das Ergebnis ist im Bild der Fig. 8 zu sehen (Die Richtung der Messstreifen sind als fünf weiße Linien (exemplarisch angegeben sind die Bezeichnungen 11, 12 und 13 und im übrigen sind nur die Linien eingezeichnet) zu erkennen. Dieses Messergebnis enthält zwar nicht alle Daten des Kiefers, jedoch sind außenseitig ausreichend viele Daten vorhanden, um diese mit den Daten der Einzelstümpfe automatisch machen zu können.

Danach beginnt mit geeigneten Einrichtungen oder verfahrensmäßig ein Software-Suchlauf, der die Daten zur Übereinstimmung bringt. Das Ergebnis sieht man im Bild der Fig. 9. Die beiden hervorgehobenen Datensätze des ersten Zahns oben links und des nächsten Zahns in dem Kiefermodell nach der Lücke stellen die referenzierten Einzelzähne dar.

Nachfolgend werden weitere Verbesserungen dargestellt und erläutert.

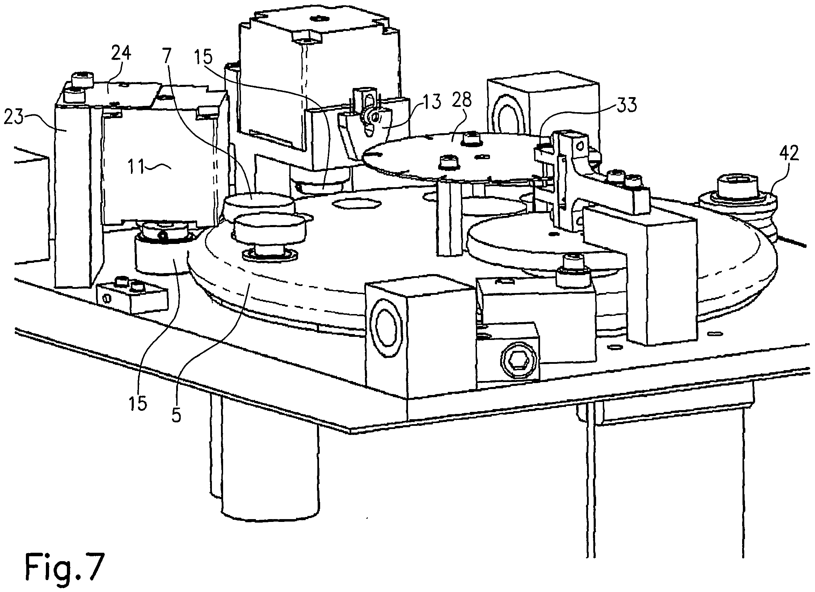

Unter Bezugnahme auf die Fig. 5, 6 und 7, wobei die Fig. 5 eine perspektivische Draufsicht und die Fig. 6 und 7 perspektivische Unteransichten derselben Vorrichtung darstellen, dient ein Drehteller 5 dazu, verschiedene Messtöpfe 8 für Einzelzähne unter die Lasermessanordnung (vergleiche Fig. 3) zu transportieren. Dieser Drehteller 5 wird mit einem Reibrad 15 (siehe Fig. 6) angetrieben. Dieses Reibrad 15 wird mittels eines Federblechs 24 (siehe Fig. 6) stirnseitig an den Drehteller 5 angedrückt. Dadurch wird ein etwaiger Verschleiß einer Gummioberfläche oder des Gummimaterials des Reibrades 15 ausgeglichen.

Die Position des Drehtellers 5 wird mittels einer Encoderscheibe 28 festgestellt. Im vorliegenden Fall ist die Scheibe, als Blech 28 (siehe Fig. 6) ausgeführt das Schlitze 100 genau an den Stellen aufweist, an denen benötigte Stopp-Positionen liegen, Die Schlitze 100 werden mittels einer Lichtschranke 33 (siehe Fig. 6) erkannt. In einer geeigneten Einrichtung oder verfahrensmäßig wertet eine Steuerungssoftware die Lichtschrankensignale aus und startet/stoppt den Tisch oder Teller 5. Der Drehteller 5 enthält sieben Positionen/Töpfe für Einzelzähne. Sollte eine Arbeit mehr als sieben Präparationen/Zähne enthalten (maximal sind 14 pro Kiefer möglich), so kann die Arbeit in 2 Chargen gescannt werden.

Vorteile der vorstehend erläuterten Vorrichtungen:
- sehr günstige Herstellkosten, überall verfügbar.
- kein Verschleiß
- Laufruhe
- exakte Positionskenntnis

Alternativ zum Reibrad 15 kann beispielsweise auch ein Riemenrad oder ein Zahnriemen eingesetzt werden.

Als Stand der Technik wird auf einen Scanner der Firma DCS Forschungs- und Entwicklungs AG, Allschwil, Schweiz, Bezug genommen, der erstmals auf der Fachmesse IDS Köln 1999 öffentlich präsentiert wurde.

Der Drehteller 5 wurde bei diesem Stand der Technik für denselben Zweck genutzt und war außen verzahnt. Mittels eines kleinen Kunststoffzahnrads wurde der Teller angetrieben. Die Wegabschnitte/Drehwinkel wurden durch eine in der Software festgelegte Anzahl von Verfahrschritten zurückgelegt. Es gab keine Rückmeldung an die Steuerung, ob der Winkel auch eingehalten wurde. Der Teller enthielt 14 Töpfe, die erlauben, alle maximal 14 Stümpfe pro Kiefer in einem Scangang zu vermessen. Diese vorbekannte Technik hat folgende Nachteile:
- Außenverzahnung sehr teuer und extrem schlecht lieferbar
- das kleine Kunststoffzahnrad war starkem Verschleiß unterworfen
- Laufgeräusche
- Fehlende Rückmeldung über die Wegposition
- die nötigen 14 Töpfe (statt vorliegend vorzugsweise sieben) verursachen unverhältnismäßig hohen Kosten für den unwahrscheinlichen Fall, dass mehr als sieben zusammenhängende Zahnstümpfe pro Arbeit vorkommen; die 14 Töpfe erfordern darüber hinaus sehr großen Bauraum und bestimmen Größe und Gewicht.

Durch weitere Maßnahmen kann auch noch eine Verbilligung der Rahmenkonstruktion erreicht werden. Dazu ist der Rahmen des Gerätes / der Vorrichtung auf zwei Führungsstangen 83 (vergleiche Fig. 3 und 4) aufgehängt. Der komplett Rahmen des Gerätes besteht also lediglich aus zwei Seitenteilen 2 (vergleiche Fig. 3 und 4), den Führungsstangen 83 (vergleiche Fig. 3 und 4) sowie einer Optikplatte (Fig. 5). Ungenauigkeiten, die durch die mechanische Ausführung der Linearstangenführung entstehen, werden durch Software (z. B mittels sogenannten "Look-Up-Tables") ausgeglichen. Eine Präzisionsspindel 94 (vergleiche Fig. 3 und 4) ist auf der Seite des Verfahrtisches angebracht, auf der sich die Laseranordnung befindet. Winkelfehler der Spindel wirken sich dadurch weniger aus. Die Vorteile dieser Ausgestaltung sind geringe Herstellungskosten, hohe Präzision, deutlich geringeres Transportgewicht und kleinere Bauweise.

Bezüglich der vorerläuterten Ausgestaltung wurden bei der von der Firma DCS Forschungs- und Entwicklungs AG, Allschwil, Schweiz, bekannt gewordenen Vorrichtung anstelle von 2 Linearstangenführungen geschliffene Linearführungen mit Kugelkäfigen verwendet. Dadurch wurde eine massive und hochgenau zu fertigende 8-teilige Rahmenkonstruktion aus massiven Metallplatten nötig. Aus Platzgründen konnte die Antriebsspindel nur auf der der Laseranordnung gegenüber liegenden Seite des Verfahrtisches angebracht werden, was bei etwas Spiel der Spindel zu Winkelfehlern führt.

Eine weitere Verbesserung gegenüber dem genannten Stand der Technik kann zum elektrischen Schutz der Laserdiode vorgenommen werden. Dazu sind die Laseroptik, die Laserdiode und die Ansteuerelektronik für die Laserdiode zusammen in einem Metallgehäuse untergebracht. Daraus ergibt sich als Vorteile ein besserer Schutz für die Diode, insbesondere gegen elektrostatische Aufladungen von außen, sowie ein schneller Austausch bei Reparaturfällen.

Bei dem Stand der Technik in Form der bekannt gewordenen Vorrichtung der Firma DCS Forschungs- und Entwicklungs AG, Allschwil, Schweiz, sind die Elektronik und die Diode getrennt angeordnet. Nach Abnahme des Gerätegehäuses liegen beide Komponenten offen, so dass Servicepersonal die Teile berühren und somit optisch beschädigen kann.

Weiterhin sind gegenüber dem genannten Stand der Technik Verbesserungen bei der Einjustierung von Kiefermodellen möglich. Um zu vermessende Kiefermodelle optimal auf den Messbereich einjustieren zu können, benötigt man eine Schablone 54 (siehe Fig. 5). Da es Kiefermodelle mit verschiedenen Durchmessern gibt (z.B. für Kinder und Erwachsene), muss das Kiefermodell entsprechend der Größe angepasst werden. Zu diesem Zweck werden beispielsweise 3 verschiedene Justagekonturen I, II und in auf die transparente Plexiglasscheibe, aus der die Schablone 54 vorzugsweise gebildet ist, graviert oder anderweitig geeignet aufgebracht.

Ferner lassen sich bei der Drehung der Einzeltöpfe um z.B. jeweils 45° weitere Verbesserungen erreichen. Der Drehteller 5 (Fig. 5, 6 und 7) transportiert die Einzeltöpfe 8 zur Messposition vor dem Reibrad 15. Während der Drehteller 5 verfährt, wird der Reibkontakt des Topfes 8 zum Reibrad 15 automatisch hergestellt. Die Neuerung besteht darin, dass das Reibrad 15 aus Gummi besteht oder zumindest eine Gummi-Laufoberfläche hat, das Gegenrad 7 jedoch aus Vollmetall. Dies hat die Vorteile eines geringeren Preises, einer einfachen Fertigung sowie einer hohen Lebensdauer. Beim Stand der Technik gemäß der Vorrichtung der Firma DCS Forschungs- und Entwicklungs AG, Allschwil, Schweiz, war das Reibrad aus Metall gefertigt und alle Gegenräder waren mit O-Ringen aus Gummi überzogen. Die Nachteile davon sind, dass die O-Ringe nach gewisser Lebensdauer rissen und die Fertigungskosten hoch sind.

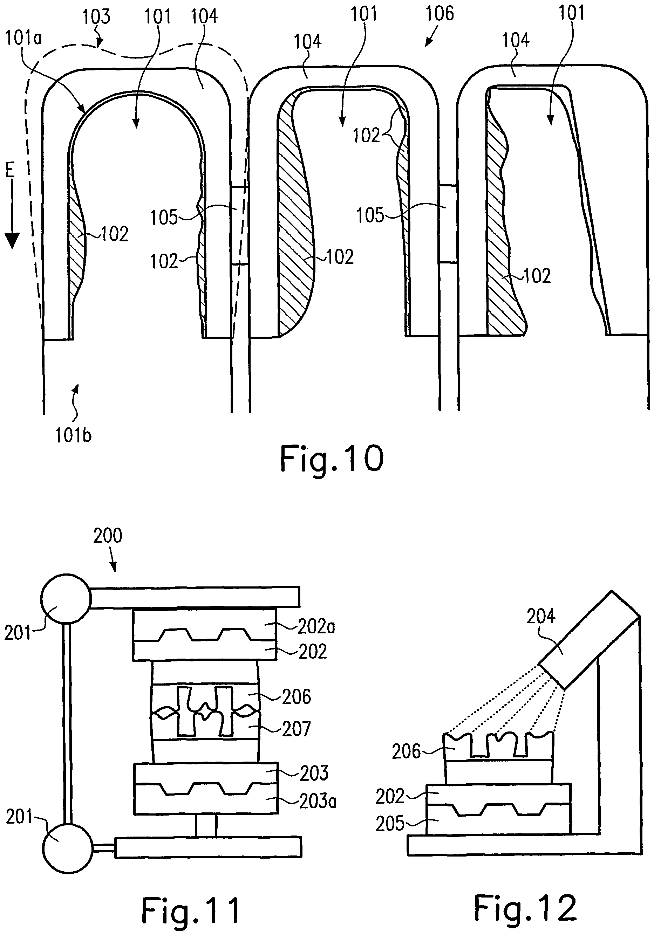

Ein weiterer Aspekt der Erfindung wird unter Bezugnahme auf die Fig. 10 erläutert. Dargestellt sind 3 Zahnstümpfe 101, bestehend jeweils aus einem beschliffenen Teil 101 a und einem Restzahnbereich 101 b. Das Beschleifen erfolgt manuell von einem Zahnarzt und führt zwangsweise zu Hinterschneidungen 102 die bei Betrachtung mehrerer nebeneinander liegender Einzelzähne bzw. deren Stümpfe 101 in Form, Lage und Größe unterschiedlich ausfallen.

Auf die Zahnstümpfe 101 zum Aufbau einer angestrebten Prothese 103, deren Gesamtsilhouette lediglich exemplarisch beim in der Fig. 10 ganz links gezeigten Stumpf 101 gestrichelt dargestellt ist, wird zunächst für wenigstens einen Stumpf 101 ein sogenanntes Käppchen 104 hergestellt, das in der Regel in genau einer Einschub- oder Aufsteckrichtung gemäß dem Pfeil E über den Stumpf 101 geschoben werden kann. Dabei ist es nicht möglich, dass das Käppchen 104 die Hinterschneidungen 102 füllt, da ein Aufschieben sonst nicht mehr möglich wäre. In dem im Zusammenhang mit dem vorliegenden Ausführungsbeispiel gezeigten Fall liegen 3 Stümpfe 101 nebeneinander und sind entsprechend 3 Käppchen 104 zu einer Brücke zusammengefasst, indem jeweils benachbarte Käppchen 104 mittels jeweils einem Steg 105 verbunden sind.

Bei der Gestaltung der Gesamtheit aller Käppchen 104 muss nun eine optimale Einschub-oder Aufsteckrichtung ermittelt werden, bei der die Hinterschneidungen 102, die sich beispielsweise auch durch bezüglich der anderen Stümpfe 101 Schräglage eines Stumpfes 101, wie in der Fig. 10 beim ganz rechten Stumpf 101 gezeigt ist, bilden, minimiert werden.

Dies kann mittels der von den Stümpfen 1 erhaltenen 3D-Daten vorab durchgeführt werden. Dazu wird, wie im übrigen bereits in den vorliegenden Unterlagen ausführlich dargestellt ist, ein 3D-Datensatz mittels erfindungsgemäßem Scannen erstellt und für Modellrechnungen zur Ermittlung der optimalen Einschub- oder Aufsteckrichtung verwendet. Bei diesem Aspekt des erfindungsgemäßen Verfahrens werden nacheinander verschiedene Aufsteckrichtungen zu Grunde gelegt und für die jeweiligen Resultate der "Totraum", der durch die Hinterschneidungen 102 bedingt ist, ermittelt. Die optimale Einschubrichtung A wird dadurch erhalten, dass die Variante mit dem kleinsten "Totraum" bestimmt wird.

Insbesondere durch eine Schräglage eines verbliebenen Stumpfes 101, aber auch infolge anderer Bearbeitungsungenauigkeiten durch den Zahnarzt können Fälle auftreten, in denen ein Käppchen bezogen auf einen Restzahnbereich 101 b stellenweise eine Wanddicke von 0 mm haben müsste. In einem solchen Fall ist grundsätzlich keine Prothese herstellbar. Es müssen für die weitere Vorgehensweise zunächst zeit- und kostenaufwendige Nachbearbeitungen eines entsprechenden Zahnstumpfes 101 erfolgen, wobei diese Arbeiten nicht sicher zu einem brauchbaren Ergebnis fuhren.

Neben der erfindungsgemäßen Optimierung der Einschubrichtung E zur Minimierung der Hinterschneidungen oder "Toträume" 102 kann die vorliegende Erfindung zu einer weiteren Verbesserung der Vorgehensweise zur Herstellung von Zahnprothesen genutzt werden. Mittels der erfassten (gescannten) 3D-Daten lassen sich Empfehlungen für den behandelnden Zahnarzt erstellen, durch welche Nachbearbeitungen der Zahnstümpfe eher eine Verbesserung von Sitz und Stabilität der herzustellenden Prothese, einschließlich deutlicher Verringerung der Hinterschneidungen oder der "Toträume" 102 erreicht werden können. Dazu wird das er-findungsgemäße Verfahren dahingehend erweitert, dass bezüglich eines erfassten 3D-Datensatzes von einem Zahnstumpf 101 oder in Kombination mehreren Zahnstümpfen 101 eine optimale Aufsteckrichtung für Käppchen 104, insbesondere eine Verbindung von mehreren Käppchen 104 zu einer Brücke 106, unter der Maßgabe berechnet wird, dass Formänderungen an dem Zahnstumpf/den Zahnstümpfen 101 möglich sind. Das erfindungsgemäße Verfahren und System dient damit nicht nur dazu, eine Anpassung an gegebene Umstände für die Herstellung und das Aufstecken von Käppchen 104 oder Brücken 106 zu ermitteln, sondern auch dazu, die gegebenen Umstände zu verändern, um das Ergebnis, d. h. die Prothese, zu optimieren. Beispielsweise kann bei dem Verfahren und System vorgesehen sein, dass eine graphische Anzeige der Stümpfe einschließlich z. B. speziell eingefärbter Bereiche für Nachbearbeitungen enthalten ist, die als Grundlage für einen Dialog zwischen einem Zahnlabor und einem Zahnarzt dient.

Durch die Erfindung in ihren vorstehend erläuterten Ausprägungen wird in vorteilhafter Welse ferner die Möglichkeit für eine Qualitätssicherung geschaffen, einschließlich insbesondere eindeutigen Zuordnungen von Behandlungsergebnissen zum Zahnarzt, der die Zahnstümpfe zurecht schleift, oder zum Zahnlabor, das die Käppchen/Kronen/Brücken anfertigt. Streitigkeiten wegen Passungenauigkeiten können damit erstmals eindeutig geklärt werden. In vorteilhafter Weise kann dabei ferner ausgenutzt werden, dass sämtliche Anfangsdaten sowie auch Daten von zwischen Zuständen lückenlos auf besonders einfache Welse und jederzeit wieder zugreifbar archiviert werden können.

Das vorstehend unter Bezugnahme auf die Fig. 10 erläuterte Verfahren und seine Varianten ist äquivalent zu entsprechend ausgebildeten Einrichtungen, mittels denen diese Verfahren durchgeführt werden können, so dass auch solche Einrichtungen, die dem Fachmann durch die Darstellungen der Verfahren in ihren allgemeinen und speziellen Ausprägungen ohne weiteres sofort klar sind, als in den vorliegenden Unterlagen offenbart gelten.

Ein weiterer Aspekt der vorliegenden Erfindung befasst sich mit der automatischen Generierung der Kaufläche einer Zahnprothese unter Berücksichtigung des Gegenbisses (Oberkiefer zu Unterkiefer). Bei dem in den Fig. 11 und 12 verdeutlichten Ausführungsbeispiel sind die nachfolgend erläuterten Schritte vorgesehen:
1. Einsetzen und Einjustieren von Ober- und Unterkiefer 206 bzw. 207 in einen Kausimulator oder Artikulator 200 mit Einstellgelenken 201, bis die Bisssituation simuliert ist, gemäß der Fig. 11. Die Aufnahmen 202/202a und 203/203a von Ober- und Unterkiefer 206 bzw. 207 haben eine erfassbare räumliche Lage. Dazu haben die Aufnahmen 202/202a und 203/203a z.B. jeweils eine definierte Null-Lage oder eine Null-Lage zueinander. Jede Aufnahme 202/202a und 203/203a ist zweiteilig und besteht jeweils aus einer Aufahmebasis 202a bzw. 203a die fest am Artikulator 200 installiert ist, und eine Kieferhalterung 202 bzw. 203 an der jeweils der Oberkiefer 206 bzw. der Unterkiefer 207 angebracht wird.
2. Einlesen / Aufnehmen von z. B. 6 Freiheitsgraden:
   2 Möglichkeiten:
      - Manuelles ablesen einer Skala
      - Auslesen von Messgebern
   Mit dem Artikulator 200 wird unter Berücksichtigung von Ober- und Unterkiefer 206 bzw. 207 die optimale/richtige Stellung der Aufnahmen 202/202a und 203/203a, d.h. eigentlich der jeweiligen Aufnahmenbasis 202a bzw. 203a ermittelt, gemäß der Fig. 11, Dies kann an dafür an dem Artikulator 200 vorgesehenen und angebrachten Skalen (nicht gezeigt) oder mittels Weg- und Winkelgebern (nicht gezeigt) automatisch geschehen. Zu beachten ist noch, dass der Artikulator 200 vorzugsweise eine Einstellung von Ober- und Unterkiefer 206 bzw. 207 zueinander in vorzugsweise sechs Freiheitsgraden ermöglicht.
3. Einsetzen der entsprechenden Kieferhalterung 202 oder 203 mit dem Oberkiefermodell 206 oder dem Unterkiefermodell 207 in eine Halterung 205 analog zu den Aufnahmebasen 202a und 203a des Scanners 204 gemäß Fig. 12, wobei die räumlichen Lage- der Halterung 205 zum Meßsystem oder dem Datensystem des Scanners 204 bekannt ist.
4. Durch Software erfolgt dann eine Referenzierung.
5.
   - Vorschlag aus Datenbank für Kaufläche (z. B. Schneidezahn)
   - Automatische Anpassung des Datenbankmodells an die Gegenbisssituation
   - Suche von Kontaktpunkten mit Hülldaten
   - Zusammenfuhren von Kaufläche und Innendatensatz
   Alternative: Kieferstellung "artikuliert" erfassen durch Scannen eines Teils der artikulierten Kiefer und anschließendes Matchen von Ober- und Unterkieferdaten mit diesen Teildatensätzen zur Erzeugung der Bissstellung.
   Auch der vorstehend unter Bezugnahme auf die Fig. 11 und 12 erläuterte Aspekt der Erfindung ist als verfahrens- und vorrichtungsmäßig offenbart anzusehen, da ein Fachmann ohne weiteres anhand der vorstehenden Erläuterungen geeignete Einrichtungen in allgemeiner oder spezieller Ausgestaltung erkennt.

## Patentansprüche

1. Oberflächenerfassungseinrichtung (1) zur Gewinnung von Oberflächendaten von Zähnen oder einem Modell davon mit Einrichtungen zur Ablaufs- und/oder Aufwandsoptimierung, die einen gepulsten Laser zur Belichtung enthalten,
**dadurch gekennzeichnet, dass**,
die Einrichtungen zur Ablaufs- und/oder Aufwandsoptimierung derart ausgelegt sind, dass zwei Halbbilder, die verschiedene Positionen oder Ansichten zeigen, ausgewertet werden.

2. Oberflächenerfassungseinrichtung (1) nach Anspruch 1,
**dadurch gekennzeichnet, dass**
eine Oberflächenerzeugungseinrichtung vorgesehen ist, die Einrichtungen zur Ablaufs-und/oder Aufwandsoptimierung umfasst, die Rohmaterial-Rückgewinnungseinrichtungen enthalten.

3. Oberflächenerfassungseinrichtung (1) nach einem der vorhergehenden Ansprüche,
**dadurch gekennzeichnet, dass**
die Einrichtungen zur Ablaufs- und/oder Aufwandsoptimierung eine automatisierte Steuerung der Intensität eines verwendeten Laserlichtes enthalten.

4. Oberflächenerfassungseinrichtung (1) nach einem der vorhergehenden Ansprüche,
**dadurch gekennzeichnet, dass**
die Einrichtung zur Ablaufs- und/oder Aufwandoptimierung Einrichtungen zum Ausführen einer Eichprozedur unter Auswertung von Überlagerungsfehlern an Matching-Stellen enthalten.

5. Oberflächenerfassungseinrichtung (1) nach einem der vorhergehenden Ansprüche,
**dadurch gekennzeichnet, dass**
eine Bildaufzeichnungseinrichtung, insbesondere ein CCD-Chip, so angeordnet ist, dass Zeilen senkrecht zur Verfahrrichtung eines Messtisches liegen.

6. Oberflächenerfassungseinrichtung (1) nach Anspruch 5,
**dadurch gekennzeichnet, dass**
die Zeilen unter Berücksichtigung des Scheimpflugwinkels senkrecht zur Verfahrrichtung des Messtisches (53) liegen.

7. Oberflächenerfassungseinrichtung (1) nach einem der vorhergehenden Ansprüche,
**dadurch gekennzeichnet, dass**
die Einrichtungen zur Ablaufs- und/oder Aufwandsoptimierung Einrichtungen zum Archivieren insbesondere von dreidimensionalen Kieferdaten und/oder zum Nachempfinden der Bissstellung von Ober- und Unterkiefer (206, 207) enthalten.

8. Oberflächenerfassungsverfahren,
**dadurch gekennzeichnet, dass**
Einrichtungen nach einem der Ansprüche 1 bis 7 verwendet werden.

## Claims

1. Surface detecting device (1) for obtaining surface data of teeth or a model therefrom with devices for process and/or cost optimization comprising a pulsed laser for illumination
**characterized in that**
the devices for process and/or cost optimization are adapted so that two half images showing different positions or views are evaluated.

2. Surface detecting device (1) according to claim 1,
**characterized in that**
a surface generating device is provided which comprises the devices for process and/or cost optimization which comprise raw material recovery devices.

3. Surface detecting device (1) according to any of the preceding claims
**characterized in that**
the devices for the process and/or cost optimization comprise an automatic control of the intensity of a laser light used.

4. Surface detecting device (1) according to any of the preceding claims
**characterized in that**
the devices for the process and/or cost optimization comprise devices for carrying out a calibration procedure by evaluating overlap errors at matching points.

5. Surface detecting device (1) according to any of the preceding claims
**characterized in that**
an image recording device, in particular a CCD chip, is arranged so that lines are located perpendicular to the direction of travel of a measuring table.

6. Surface detecting device (1) according to claim 5
**characterized in that**
the lines, taking into account the Scheimpflug angle, are located perpendicular to the direction of travel of the measuring table (53).

7. Surface detecting device (1) according to any of the preceding claims
**characterized in that**
the devices for the process and/or cost optimization comprise devices for archiving especially three dimensional jaw data and/or for modelling the bite position of upper and lower jaws (206, 207).

8. Surface detecting method
**characterized in that**
devices according to any one of claims 1 to 7 are used.

## Revendications

1. Dispositif de relevé de surface (1) pour recueillir des données de surface de dents ou d'un modèle de dents, avec des dispositifs pour optimiser le déroulement et/ou la dépense, qui contiennent un laser pulsé pour l'exposition,
**caractérisé en ce que** les dispositifs pour optimiser le déroulement et/ou la dépense sont conçus pour que deux moitiés d'image qui montrent différentes positions ou vues soient analysées.

2. Dispositif de relevé de surface (1) selon la revendication 1, **caractérisé en ce qu'**il est prévu un dispositif de production de surface qui comprend des dispositifs pour optimiser le déroulement et/ou la dépense, lesquels contiennent des dispositifs de récupération de matière brute.

3. Dispositif de relevé de surface (1) selon l'une des revendications précédentes, **caractérisé en ce que** les dispositifs pour optimiser le déroulement et/ou la dépense contiennent une commande automatisée de l'intensité d'une lumière laser utilisée.

4. Dispositif de relevé de surface (1) selon l'une des revendications précédentes, **caractérisé en ce que** le dispositif pour optimiser le déroulement et/ou la dépense contient des dispositifs pour exécuter une procédure d'étalonnage en analysant des erreurs de recouvrement au niveau de points de couplage.

5. Dispositif de relevé de surface (1) selon l'une des revendications précédentes, **caractérisé en ce qu'**un dispositif d'enregistrement d'image, en particulier une puce CCD, est disposé de telle sorte que des lignes soient perpendiculaires au sens de déplacement d'une table de mesure.

6. Dispositif de relevé de surface (1) selon la revendication 5, **caractérisé en ce que** les lignes sont perpendiculaires au sens de déplacement de la table de mesure (53) compte tenu de l'angle de Scheimpflug.

7. Dispositif de relevé de surface (1) selon l'une des revendications précédentes, **caractérisé en ce que** les dispositifs pour optimiser le déroulement et/ou la dépense contiennent des dispositifs pour archiver en particulier des données de maxillaire tridimensionnelles et/ou pour imiter la position d'occlusion des maxillaires supérieur et inférieur (206, 207).

8. Procédé de relevé de surface, **caractérisé en ce que** des dispositifs selon l'une des revendications 1 à 7 sont utilisés.
